# EUROPÄISCHE PATENTSCHRIFT

(11) **EP 2 083 231 B1**
(45) Veröffentlichungstag und Bekanntmachung des Hinweises auf die Patenterteilung: **29.04.2015**
(21) Anmeldenummer: 09000195.9
(22) Anmeldetag: 09.01.2009
(51) Int. Cl.: F25B 17/08

(54) **Vakuum-Sorptionsvorrichtung**
Vacuum sorption device
Dispositif de sorption sous vide

(30) Priorität: 28.01.2008 DE 102008006420
(43) Veröffentlichungstag der Anmeldung: 29.07.2009
(73) Patentinhaber: Viessmann Werke GmbH & Co. KG, 35107 Allendorf (DE)
(72) Erfinder: Dawoud, Belal Dr., 35066 Frankenberg (DE); Bornmann, Andreas, 35099 Burgwald (DE); Lohmöller, Stefanie, 35088 Battenberg (DE)
(74) Vertreter: Wolf, Michael

(56) Entgegenhaltungen:
- WO-A-2005/054757
- CN-Y- 2 521 556
- DE-A1- 3 625 247
- DE-A1-102004 049 408
- JP-A- 7 035 435
- JP-A- 2006 052 889

## Beschreibung

Die Erfindung betrifft eine Vakuum-Sorptionsvorrichtung gemäß dem Oberbegriff des Patentanspruchs 1.

Eine Vakuum-Sorptionsvorrichtung der eingangs genannten Art und deren Funktionsweise ist nach der DE 10 2004 049 408 B4 bekannt. Diese besteht aus einem ersten Volumenbereich, in dem ein periodisch ein Kältemittel (zum Beispiel Wasser) sorbierender oder desorbierender Sorber (zum Beispiel Zeolith) und ein Kondensator angeordnet sind. Die Maßgabe, dass der Kondensator im ersten Volumenbereich angeordnet sein soll, umfasst dabei die aus DE 36 25 247 A1 bekannte Option, den Kondensator in Form eines ringspaltförmigen Mantels um den Sorber herum anzuordnen. Ferner besteht die Vakuum-Sorptionsvorrichtung aus einem unterhalb des ersten angeordneten zweiten Volumenbereich, in dem ein Verdampfer angeordnet ist. Der Verdampfer wird regelmäßig mit auf niedrigem Temperaturniveau befindlicher Umgebungswärme betrieben. Schließlich besteht die Vakuum-Sorptionvorrichtung noch aus einem dritten Volumenbereich, der zur Aufnahme von Kältemittel über eine mit einer Pumpe versehene Verbindungsleitung mit dem zweiten Volumenbereich fluidisch verbunden ist und der zur Abgabe von Kältemittel an den zweiten Volumenbereich mindestens eine Öffnung aufweist. Bei der DE 10 2004 049 408 B4 ist diese Öffnung als schmaler Ringspalt am oberen Ende des Schwimmergehäuses ausgebildet. Der dritte Volumenbereich dient dabei letztlich dazu, den Schwimmer des Verschlusselements aufzunehmen.

Der Erfindung liegt die Aufgabe zugrunde, bei einer Vakuum-Sorptionsvorrichtung der eingangs genannten Art den Wirkungsgrad weiter zu verbessern.

Diese Aufgabe ist mit einer Vakuum-Sorptionsvorrichtung der eingangs genannten Art durch die im Kennzeichen des Patentanspruchs 1 aufgeführten Merkmale gelöst.

Nach der Erfindung ist also vorgesehen, dass der dritte Volumenbereich eine zur mindestens teilweise Kältemittelfreistellung des Verdampfers ausreichende Volumengröße aufweist.

Mit anderen Worten ausgedrückt, wird der aus der DE 10 2004 049 408 B4 an sich bekannte, aber einem anderen Zweck dienende Volumenbereich erfindungsgemäß derart vergrößert, dass dieser so viel Kältemittel aufnehmen kann, dass der Verdampfer mindestens teilweise freigestellt ist. Die Maßgabe "Kältemittelfreistellung" bringt dabei zum Ausdruck, dass es bei der erfindungsgemäßen Vakuum-Sorptionsvorrichtung möglich ist, den zweiten Volumenbereich derart abzupumpen, dass der Verdampfer danach jedenfalls mindestens teilweise "trockengelegt" ist, sprich nicht mehr vollständig vom Kältemittel umschlossen ist. Hinsichtlich der vorerwähnten Wirkungsgradoptimierung ist dabei natürlich vorgesehen, den Verdampfer vorzugsweise vollständig vom Kältemittel freizustellen.

Dank des erfindungsgemäß entsprechend groß ausgelegten dritten Volumenbereichs kommt es einerseits wegen der wesentlich verbesserten Bedingungen beim Verdampfungsprozess zu einem höheren Wirkungsgrad der Gesamtvorrichtung, andererseits kann darüber hinaus aber auch auf die aus der DE 10 2004 049 408 B4 bekannt Trennwand mit verschließbarer Öffnung verzichtet werden, da erfindungsgemäß, was weiter unten noch genauer erläutert wird (siehe Absatz [0023]), die Kältemitteloberfläche (und gegebenenfalls weitere Bauteile) zur Abtrennung der beiden Volumenbereiche (erster und zweiter Volumenbereich) genutzt wird.

Andere vorteilhafte Weiterbildungen ergeben sich aus den abhängigen Patentansprüchen.

Die erfindungsgemäße Vakuum-Sorptionsvorrichtung einschließlich ihrer vorteilhaften Weiterbildungen gemäß der abhängigen Patentansprüche wird nachfolgend anhand der zeichnerischen Darstellung verschiedener Ausführungsbeispiele näher erläutert.

Es zeigt jeweils im Schnitt (soweit sich nichts anderes ergibt, gelten die verwendeten Bezugszeichen jeweils in allen Figuren):
- Figur 1: eine erste Ausführungsform der erfindungsgemäßen Vakuum-Sorptionsvorrichtung zu Beginn der Desorptionsphase mit einem Überlauf am dritten Volumenbereich;
- Figur 2: die Ausführungsform gemäß Figur 1 am Ende der Desorptionsphase;
- Figur 3: die Ausführungsform gemäß Figur 1 und 2 während der Sorptionsphase;
- Figur 4: eine der ersten Ausführungsform ähnliche zweite Ausführungsform zu Beginn der Desorptionsphase, wobei der dritte Volumenbereich ausschließlich oberhalb des Verdampfers angeordnet ist;
- Figur 5: eine dritte Ausführungsform zu Beginn der Desorptionsphase mit einem bis auf Öffnungen oberhalb des Verdampfers geschlossenen dritten Volumenbereichs;
- Figur 6: die Ausführungsform gemäß Figur 5 am Ende der Desorptionsphase;
- Figur 7: die Ausführungsform gemäß Figur 5 und 6 während der Sorptionsphase;
- Figur 8: eine der dritten Ausführungsform ähnliche vierte Ausführungsform zu Beginn der Desorptionsphase, wobei der dritte Volumenbereich ausschließlich oberhalb des Verdampfers angeordnet ist;
- Figur 9: eine fünfte Ausführungsform zu Beginn der Desorptionsphase mit einem Überlauf am dritten Volumenbereich, wobei dieser teilweise außerhalb des zweiten Volumenbereichs angeordnet ist;
- Figur 10: die Ausführungsform gemäß Figur 9 am Ende der Desorptionsphase;
- Figur 11: die Ausführungsform gemäß Figur 9 und 10 während der Sorptionsphase;
- Figur 12: eine sechste Ausführungsform zu Beginn der Desorptionsphase mit einem bis auf Öffnungen oberhalb des Verdampfers geschlossenen dritten Volumenbereichs, wobei dieser teilweise außerhalb des zweiten Volumenbereichs angeordnet ist;
- Figur 13: die Ausführungsform gemäß Figur 12 am Ende der Desorptionsphase; und
- Figur 14: die Ausführungsform gemäß Figur 12 und 13 während der Sorptionsphase.

Alle Ausführungsformen der erfindungsgemäßen Vakuum-Sorptionsvorrichtung bestehen aus:
- einem ersten Volumenbereich 1, in dem ein periodisch ein Kältemittel sorbierender oder desorbierender Sorber 4 und ein Kondensator 5 angeordnet sind (das Kältemittel ist in den Figuren stets als graue Fläche dargestellt);
- einem unterhalb des ersten angeordneten zweiten Volumenbereich 2, in dem ein Verdampfer 6 angeordnet ist; und
- einen dritten Volumenbereich 3 (der außerhalb des ersten Volumenbereichs 1 angeordnet ist), der zur Aufnahme von Kältemittel über eine mit einer Pumpe 7 versehene Verbindungsleitung 8 mit dem zweiten Volumenbereich 2 fluidisch verbunden ist und der zur Abgabe von Kältemittel an den zweiten Volumenbereich 2 mindestens eine Öffnung aufweist.

Für alle Ausführungsformen der erfindungsgemäßen Vakuum-Sorptionsvorrichtung ist nun wesentlich, dass der dritte Volumenbereich 3 eine zur mindestens teilweise Kältemittelfreistellung des Verdampfers 6 ausreichende Volumengröße aufweist.

Wie bereits eingangs erwähnt, ist dieser dritte Volumenbereich 3 im Unterschied zu dem gemäß der DE 10 2004 049 408 B4 erfindungsgemäß so groß ausgebildet, dass er das Kältemittel zumindest in einem solchen Maße aufnehmen kann, dass der Verdampfer 6 während der Sorptionsphase zumindest teilweise nicht vom Kältemittel umschlossen ist. Diese Maßgabe führt, wie ebenfalls bereits erläutert, zu einer Steigerung des Wirkungsgrades der Vorrichtung, da die Verdampfung wesentlich besser erfolgen kann, als wenn der Verdampfer vollständig vom Kältemittel umschlossen ist.

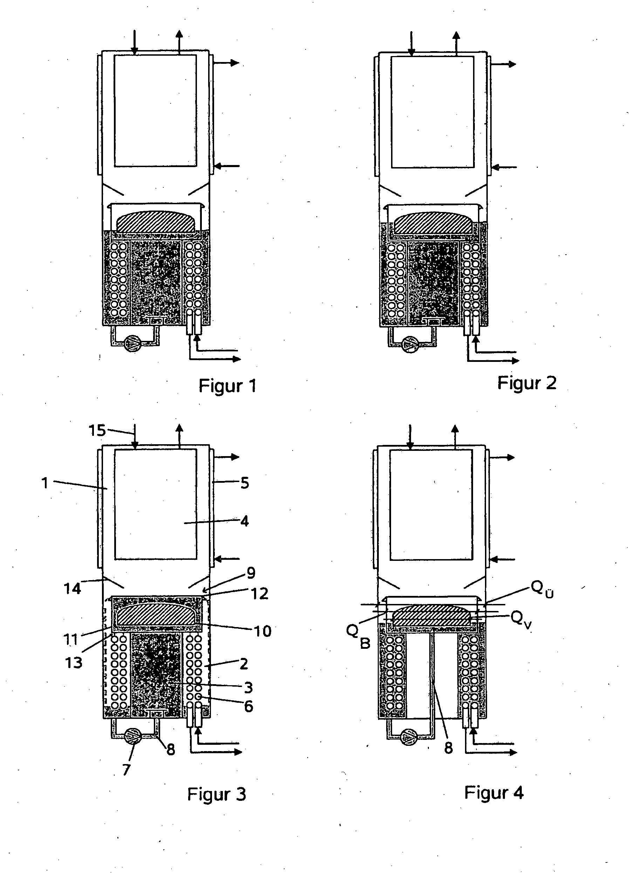

Mit Verweis auf die Figuren 1 bis 14 besteht eine besonders bevorzugte Ausführungsform darin, dass in einem eine horizontale Querschnittsfläche Q_{Ü} definierenden Übergangsbereich zwischen dem ersten und zweiten Volumenbereich 1, 2 ein Verdrängungskörper 10 angeordnet ist (gemeint ist im folgenden stets die horizontale Gesamtquerschnittsfläche), der weiterhin bevorzugt eine horizontale Querschnittsfläche Q_{V} aufweist, die kleiner als die Querschnittsfläche Q_{Ü} des Übergangsbereichs ist (Ziel: [Q_{Ü} - Q_{V}] soll klein, aber nicht null sein). Diese Maßgabe hat zur Folge, dass während der Desorptionsphase, worauf noch genauer eingegangen wird (siehe Absatz [0023]), nur eine relativ kleine, freie Kältemitteloberfläche entsteht. Diese bildet dabei zusammen mit dem Verdrängungskörper 10 gewissermaßen einen Wärmeübertragungsschutz, wobei der Verdrängungskörper 10 bevorzugt aus einem schlecht wärmeleitenden Material gebildet ist und eine zum Beispiel etwa pilzkopfförmige (oder auch kegel- oder konusförmige) Aussenkontur aufweist, damit das Kältemittel gut in den zweiten bzw. dritten Volumenbereich 2, 3 ablaufen kann. Dazu ist ferner vorgesehen, dass die Oberfläche des Verdrängungskörpers 10 kältemittelabweisend ausgebildet ist, sprich im Falle von Wasser als Kältemittel hydrophob ist.

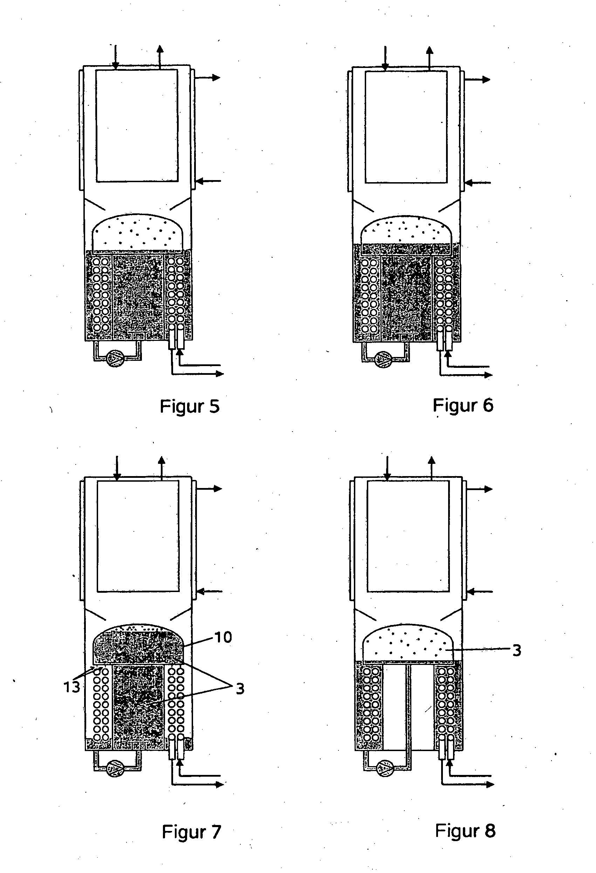

Während der Verdrängungskörper 10 bei den Ausführungsformen nach Figur 1 bis 4 und 9 bis 14 im Prinzip als geschlossener Körper ausgebildet ist, der innen wahlweise hohl oder mit beliebigen Material gefüllt ist, wird dem Verdrängungskörper 10 gemäß den Figuren 5 bis 8 noch eine Zusatzfunktion übertragen, nämlich mindestens einen Teil des dritten Volumenbereichs 3 zu bilden. Der Verdrängungskörper 10 dient bei diesen beiden Ausführungsbeispielen also einerseits dazu, dass aus dem ersten Volumenbereich 1 kommende Kältemittel gezielt in den zweiten Volumenbereich 2 abzuleiten, andererseits bildet das innere Volumen des Verdrängungskörpers 10 aber auch gleichzeitig mindestens einen Teil des dritten Volumenbereichs (Figuren 5 bis 7) oder sogar den kompletten dritten Volumenbereich 3 (Figur 8).

Weiterhin ist gemäß den Ausführungsformen nach Figur 1 bis 4 und 9 bis 11 vorgesehen, dass der Verdrängungskörper 10 in einem die Öffnung aufweisenden, mindestens teilweise den dritten Volumenbereich 3 bildenden Behälter 11 angeordnet ist. Dieser weist dabei im Anordnungsbereich des Verdrängungskörpers 10 eine horizontale Querschnittsfläche Q_{B} auf, die größer als die des Verdrängungskörpers 10, aber kleiner als die des Übergangsbereichs ausgebildet ist (auch hier ist wieder das Ziel: [Q_{B} - Q_{V}] bzw. [Q_{Ü} - Q_{B}] soll klein, aber nicht null sein). Der zum Sorber 4 hin offene Behälter 11, der bevorzugt an seiner (sorberseitigen) Oberkante einen zum zweiten Volumenbereich 2 gerichteten Kältemittel-Überlauf 12 aufweist, bildet auf diese Weise auch die eingangs genannte Öffnung, wobei der Kältemittel-Überlauf 12 bevorzugt in einen verdampferfreien Bereich des zweiten Volumenbereichs 2 weisend ausgebildet ist. Auf diese Weise gelangt überlaufendes Kältemittel nicht direkt auf den Verdampfer 6, sondern "tropft", wie zum Beispiel in Figur 3 dargestellt, seitlich an diesem vorbei.

Bei den Ausführungsbeispielen gemäß der Figuren 1 bis 8 ist der dritte Volumenbereich 3 jeweils vollständig innerhalb des zweiten Volumenbereichs 2 angeordnet, was insbesondere hinsichtlich von Dichtigkeitsaspekten mit Blick auf das einzuhaltende Vakuum günstig ist.

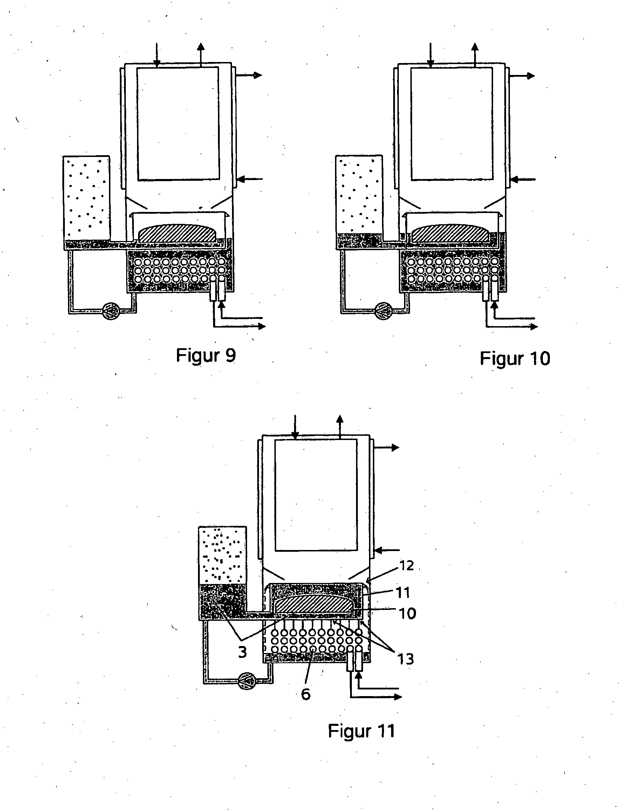

Alternativ kann aber auch, wie die Figuren 9 bis 14 zeigen, vorgesehen sein, dass der dritte Volumenbereich 3 mindestens teilweise ausserhalb des zweiten Volumenbereichs 2 angeordnet ist.

Weiterhin ist bevorzugt vorgesehen, dass der dritte Volumenbereich 3 mindestens teilweise oberhalb des Verdampfers 6 angeordnet ist und dem Verdampfer 6 zugewandte Austrittsöffnungen 13 (bzw. Berieselungs- oder Besprühungsöffnungen) für das Kältemittel aufweist. Wie noch erläutert wird (siehe hierzu Absatz [0025]), dienen diese Austrittsöffnungen 13, die ebenfalls als die vorgenannten Öffnungen zu verstehen sind, dazu, den Verdampfer direkt mit Kältemittel zu "berieseln".

Bezüglich des Verdampfers 6 ist im übrigen vorgesehen, dass dieser aus mindestens einem, in seiner Axialrichtung gekrümmten Rohr gebildet bzw. insbesondere als Rohrwendel ausgebildet ist. Mit Verweis auf die Figuren 1 bis 8 ist dabei weiterhin im Zentrum des als Rohrwendel ausgebildeten Verdampfers 6 ein Freiraum vorgesehen, der wenigstens teilweise vom dritten Volumenbereich 3 ausgefüllt ist.

Schließlich ist bei allen Ausführungsformen zwischen dem ersten und zweiten Volumenbereich 1, 2 ein das kondensierte Kältemittel wahlweise direkt oder indirekt zur Öffnung führendes Leitelement 14 angeordnet.

Die erfindungsgemäße Vakuum-Sorptionsvorrichtung funktioniert wie folgt:

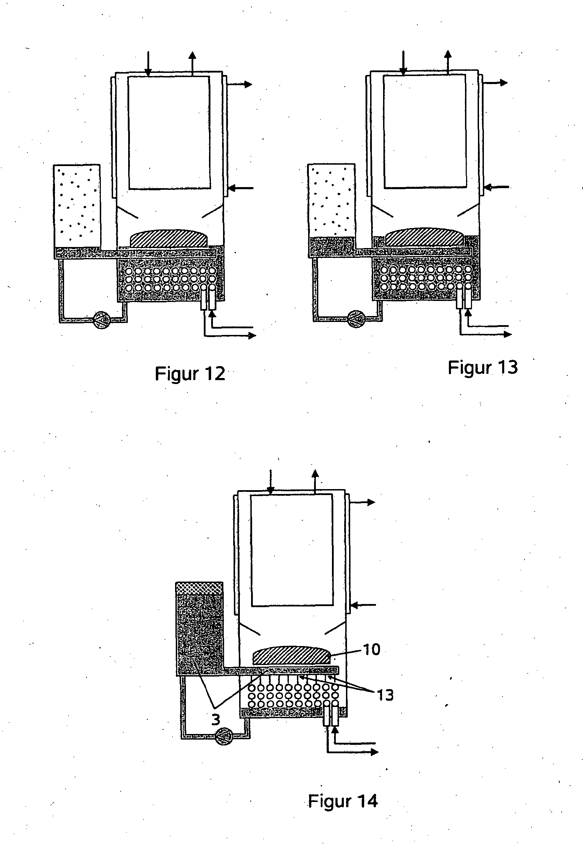

Zu Beginn der Desorptionsphase (siehe Figuren 1, 4, 5, 8, 9 und 12) wird dem Sorber 4 über den andeutungsweise dargestellten Sorber-Anschluss 15 Wärme zugeführt (das entsprechende Wärmeträgermedium wird anschließend über den daneben dargestellten Anschluss wieder abgeführt). Dadurch steigt die Temperatur des Sorbers an und das darin gebundene Kältemittel wird freigesetzt. Der warme Kältemitteldampf kondensiert dann mit fortschreitender Desorptionsphase am Kondensator 5, der entsprechend gekühlt wird (siehe die andeutungsweise dargestellten Anschlüsse des Kondensators zur Zu- und Abführung eines entsprechenden Kühlmittels). Je länger die Desorptionsphase dauert, desto mehr Kältemittel kondensiert und läuft über das Leitelement 14 und den Verdrängungskörper 10 wahlweise in den zweiten Volumenbereich 2 (Figuren 6 und 13) oder direkt in den dritten Volumenbereich 3 (Figuren 2 und 10). Während der Desorptionsphase ist der Verdampfer 6 stets vollständig vom Kältemittel umspült bzw. umschlossen. Dank des Verdrängungskörpers 10 ist dabei dafür gesorgt, dass die freie Kältemitteloberfläche (als Trennebene zwischen dem ersten und zweiten Volumenbereich 1, 2) sehr klein gehalten werden kann.

Erst zu Beginn der Sorptionsphase (inzwischen wurde die Wärmezufuhr zum Sorber 4 unterbrochen) wird die Pumpe 7 eingeschaltet, was dazu führt, dass im zweiten Volumenbereich 2 befindliches Kältemittel über die Leitung 8 "abgesaugt" und dem dritten Volumenbereich 3 zugeführt wird. Durch das Abpumpen gelangt einerseits immer mehr Kältemittel in den dritten Volumenbereich 3, andererseits gelingt es auf diese Weise den Verdampfer 6 "freizulegen", d. h. dieser wird durch das Abpumpen immer weiter freigestellt.

Da das Abpumpen gleichzeitig wahlweise zu einem Überlaufen und/oder Ablaufen des Kältemittels über den Kältemittel-Überlauf 12 (Figur 3 und 11) bzw. die Austrittsöffnungen 13 (Figur 3, 7, 11 und 14) führt, ergibt sich eine Benetzung bzw. Berieselung des Verdampfers 6 mit Kältemittel, die eine deutlich verbesserten Verdampfung zur Folge hat, als eine, bei der der Verdampfer vollständig vom Kältemittel umschlossen, sprich ins Kältemittel eingetaucht ist. Das am Verdampfer 6 verdampfte Kältemittel wird dann vom Sorber 4 sorbiert, der dabei in an sich bekannter Weise nutzbare Wärme freisetzt.

Bei der Lösung nach den Figuren 1 bis 3 ist im Unterschied zur Lösung nach Figur 4 auch das Volumen unterhalb des Behälters 11 zur Aufnahme von Kältemittel ausgelegt, d. h. die Pumpe 7 fördert in diesem Fall in einen vom Wendelrohrwärmetauscher (Verdampfer 6) umschlossenen, mindestens einen Teil des Volumenbereichs 3 bildenden Freiraum. Bei der Lösung nach Figur 4 pumpt die Pumpe 7 das Kältemittel über die Leitung 8 direkt in den oberhalb des Verdampfers 6 angeordneten Behälter 11.

Bei den Lösungen nach den Figuren 5 bis 8 bildet der Innenraum des pilzkopfförmigen Verdrängungskörpers 10 entweder teilweise (Figuren 5 bis 7) oder vollständig (Figur 8) den dritten Volumenbereich 3. Die Punkte in den Figuren stellen (stets) Dampfmoleküle dar. Das Kältemittel kann den Volumenbereich 3 bei diesen Konstruktionen ausschließlich über die Austrittsöffnungen 13 verlassen, die oberhalb der Verdampferrohre am kreisringförmigen Boden des pilzkopfförmigen Verdrängungskörpers 10 angeordnet sind, und zwar so, dass, wie insbesondere Figur 7 zeigt, das Kältemittel gezielt auf den Verdampfer 6 "rieselt" oder "gesprüht wird" (je nach Druck bzw. Leistungseinstellung der Pumpe).

Bei der Lösung nach den Figuren 9 bis 11 ist ein Teil des dritten Volumenbereichs 3 außerhalb des ersten und zweiten Volumenbereichs 1, 2 angeordnet. Wie in den Figuren 1 bis 4 ist zwar auch ein zum Sorber 4 hin offener Behälter 11 vorgesehen, in dem ein Verdrängungskörper 10 angeordnet ist, in diesem Fall ist aber das Volumen unterhalb des Behälters 11 im wesentlichen durch den Verdampfer 6 ausgefüllt, wobei Kältemittel vom dritten Volumenbereich 3 einerseits über die Kältemittel-Überläufe 12 und andererseits über die Austrittsöffnung 13 in den zweiten Volumenbereich 2 gelangen kann. Figur 11 zeigt dabei die Sorptionsphase, bei der der Verdampfer 6 im wesentlich "freigestellt" ist und vom Kältemittel über die Austrittsöffnungen 13 berieselt wird, wobei die Pumpe 7 (wie auch sonst) dafür sorgt, dass im Volumenbereich 3 stets genug Kältemittel gelagert ist.

Die Lösung nach den Figuren 12 bis 14 unterscheidet sich schließlich von der vorbeschriebenen dadurch, dass diese ohne den Behälter 11 auskommt. In diesem Fall ist lediglich ein Teil des dritten Volumenbereichs 3 in den Bereich oberhalb des Verdampfers 6 erstreckt ausgebildet, wobei wiederum die Austrittsöffnungen 13 (siehe Figur 14) zur Berieselung bzw. Besprühung des Verdampfers 6 dienen. Kältemittel-Überläufe 12 (wie in Figur 1 bis 4 und 9 bis 11 gibt es bei dieser Lösung nicht.

### Bezugszeichenliste

- 1: erster Volumenbereich
- 2: zweiter Volumenbereich
- 3: dritter Volumenbereich
- 4: Sorber
- 5: Kondensator
- 6: Verdampfer
- 7: Pumpe
- 8: Verbindungsleitung
- 10: Verdrängungskörper
- 11: Behälter
- 12: Kältemittel-Überlauf
- 13: Austrittsöffnung
- 14: Leitelement
- 15: Sorber-Anschluss

- Q_{Ü}: Querschnittsfläche des Übergangsbereichs
- Q_{V}: Querschnittsfläche des Verdrängungskörpers
- Q_{B}: Querschnittsfläche des Behälters

## Patentansprüche

1. Vakuum-Sorptionsvorrichtung, umfassend
- einen ersten Volumenbereich (1), in dem ein periodisch ein Kältemittel sorbierender oder desorbierender Sorber (4) und ein Kondensator (5) angeordnet sind,
- einen unterhalb des ersten angeordneten zweiten Volumenbereich (2), in dem ein während der Desorptionsphase vollständig vom Kältemittel umschlossener Verdampfer (6) angeordnet ist, und
- einen dritten Volumenbereich (3), der zur Aufnahme von Kältemittel über eine mit einer Pumpe (7) versehene Verbindungsleitung (8) mit dem zweiten Volumenbereich (2) fluidisch verbunden ist und der zur Abgabe von Kältemittel an den zweiten Volumenbereich (2) mindestens eine Öffnung aufweist,
**dadurch gekennzeichnet,**
**dass** der dritte Volumenbereich (3) eine zur mindestens teilweise Kältemittelfreistellung des Verdampfers (6) ausreichende Volumengröße aufweist.

2. Vakuum-Sorptionsvorrichtung nach Anspruch 1,
**dadurch gekennzeichnet, dass** in einem eine horizontale Querschnittsfläche (Q_{Ü}) definierenden Übergangsbereich zwischen dem ersten und zweiten Volumenbereich (1, 2) ein Verdrängungskörper (10) angeordnet ist.

3. Vakuum-Sorptionsvorrichtung nach Anspruch 2,
**dadurch gekennzeichnet, dass** der dritte Volumenbereich (3) mindestens teilweise im Verdrängungskörper (10) angeordnet ist.

4. Vakuum-Sorptionsvorrichtung nach Anspruch 2 oder 3,
**dadurch gekennzeichnet, dass** der Verdrängungskörper (10) eine horizontale Querschnittsfläche (Q_{V}) aufweist, die kleiner als die Querschnittsfläche (Q_{Ü}) des Übergangsbereichs ist.

5. Vakuum-Sorptionsvorrichtung nach einem der Ansprüche 2 bis 4, **dadurch gekennzeichnet,**
**dass** der Verdrängungskörper (10) in einem die Öffnung aufweisenden, mindestens teilweise den dritten Volumenbereich (3) bildenden Behälter (11) angeordnet ist.

6. Vakuum-Sorptionsvorrichtung nach Anspruch 5, **dadurch gekennzeichnet,**
**dass** der Behälter (11) im Anordnungsbereich des Verdrängungskörpers (10) eine horizontale Querschnittsfläche (Q_{B}) aufweist, die größer als die des Verdrängungskörpers (10), aber kleiner als die des Übergangsbereichs ausgebildet ist.

7. Vakuum-Sorptionsvorrichtung nach Anspruch 5 oder 6, **dadurch gekennzeichnet,**
**dass** der Behälter (11) mindestens einen Kältemittel-Überlauf (12), aufweist, wobei vorzugsweise der Kältemittel-Überlauf (12) in einen verdampferfreien Bereich des zweiten Volumenbereichs (2) weisend ausgebildet ist.

8. Vakuum-Sorptionsvorrichtung nach einem der Ansprüche 2 bis 7, **dadurch gekennzeichnet,**
**dass** der Verdrängungskörper (10) eine etwa pilzkopfförmige, konusförmige, kegelförmige oder dergleichen Aussenkontur aufweist.

9. Vakuum-Sorptionsvorrichtung nach einem der Ansprüche 1 bis 8, **dadurch gekennzeichnet,**
**dass** der dritte Volumenbereich (3) vollständig innerhalb des zweiten Volumenbereichs (2) angeordnet ist.

10. Vakuum-Sorptionsvorrichtung nach einem der Ansprüche 1 bis 8, **dadurch gekennzeichnet,**
**dass** der dritte Volumenbereich (3) mindestens teilweise ausserhalb des zweiten Volumenbereichs (2) angeordnet ist.

11. Vakuum-Sorptionsvorrichtung nach einem der Ansprüche 1 bis 10, **dadurch gekennzeichnet,**
**dass** der dritte Volumenbereich (3) mindestens teilweise oberhalb des Verdampfers (6) angeordnet ist.

12. Vakuum-Sorptionsvorrichtung nach einem der Ansprüche 1 bis 11, **dadurch gekennzeichnet,**
**dass** der dritte Volumenbereich (3) dem Verdampfer (6) zugewandte Austrittsöffnungen (13) für das Kältemittel aufweist.

13. Vakuum-Sorptionsvorrichtung nach einem der Ansprüche 1 bis 12, **dadurch gekennzeichnet,**
**dass** der Verdampfer (6) aus mindestens einem, in seiner Axialrichtung gekrümmten Rohr gebildet ist.

14. Vakuum-Sorptionsvorrichtung nach einem der Ansprüche 1 bis 13, **dadurch gekennzeichnet,**
**dass** der Verdampfer (6) als Rohrwendel ausgebildet ist, wobei vorzugsweise im Zentrum des als Rohrwendel ausgebildeten Verdampfers (6) ein Freiraum vorgesehen ist, der wenigstens teilweise vom dritten Volumenbereich (3) ausgefüllt ist.

15. Vakuum-Sorptionsvorrichtung nach einem der Ansprüche 1 bis 14, **dadurch gekennzeichnet,**
**dass** zwischen dem ersten und zweiten Volumenbereich (1, 2) ein das Kältemittel wahlweise direkt oder indirekt zur Öffnung führendes Leitelement (14) angeordnet ist.

## Claims

1. A vacuum sorption device, comprising
- a first volume area (1) in which a sorber (4), which periodically sorbs or desorbs a refrigerant, and a condenser (5) are arranged,
- a second volume area (2) which is arranged below the first volume area, in which a vaporizer (6) is arranged which is completely enclosed by the refrigerant during the desorption phase, and
- a third volume area (3) which, for receiving refrigerant, is fluidically connected to the second volume area (2) via a connection line (8) provided with a pump (7), and which has at least one opening for delivering refrigerant to the second volume area (2)
**characterized in**
**that** the third volume area (3) has a volume capacity that is sufficient for releasing the vaporizer (6) at least partially from refrigerant.

2. The vacuum sorption device according to claim 1,
**characterized in**
**that** in a transition area between the first and second volume areas (1, 2), which defines a horizontal cross-sectional area (Q_{Ü}), a displacement body (10) is arranged.

3. The vacuum sorption device according to claim 2,
**characterized in**
**that** the third volume area (3) is at least partially arranged in the displacement body (10).

4. The vacuum sorption device according to claim 2 or 3,
**characterized in**
**that** the displacement body (10) has a horizontal cross-sectional area (Q_{V}) that is smaller than the cross-sectional area (Q_{Ü}) of the transition area.

5. The vacuum sorption device according to any one of claims 2 to 4,
**characterized i n**
that the displacement body (10) is arranged in a container (11) which comprises the opening and forms at least partially the third volume area (3).

6. The vacuum sorption device according to claim 5,
**characterized i n**
that the container (11), in the arrangement area of the displacement body (10), has a horizontal cross-sectional area (Q_{B}) that is larger than that of the displacement body (10), but smaller than that of the transition area.

7. The vacuum sorption device according to claim 5 or 6,
**characterized in**
**that** the container (11) has at least one refrigerant overflow (12), wherein the refrigerant overflow (12) is preferably formed to point into a vaporizer-free area of the second volume area (2).

8. The vacuum sorption device according to any one of claims 2 to 7,
**characterized i n**
that the displacement body (10) has an approximately mushroom-shaped, cone-shaped, conical, or the like, outer contour.

9. The vacuum sorption device according to any one of claims 1 to 8,
**characterized i n**
that the third volume area (3) is arranged completely within the second volume area (2).

10. The vacuum sorption device according to any one of claims 1 to 8,
**characterized in**
**that** the third volume area (3) is arranged at least partially outside of the second volume area (2).

11. The vacuum sorption device according to any one of claims 1 to 10,
**characterized in**
**that** the third volume area (3) is arranged at least partially above the vaporizer (6).

12. The vacuum sorption device according to any one of claims 1 to 11,
**characterized in**
**that** the third volume area (3) has outlet openings (13) for the refrigerant, which face towards the vaporizer (6).

13. The vacuum sorption device according to any one of claims 1 to 12,
**characterized in**
**that** the vaporizer (6) is formed from at least one tube that is curved in its axial direction.

14. The vacuum sorption device according to any one of claims 1 to 13,
**characterized i n**
that the vaporizer (6) is formed as a coiled tube, wherein a free space is preferably provided in the center of the vaporizer (6) that is formed as a coiled tube, which free space is filled at least partially by the third volume area (3).

15. The vacuum sorption device according to any one of claims 1 to 14,
**characterized in**
**that** between the first and second volume areas (1, 2), a guide element (14) is arranged which selectively guides the refrigerant directly or indirectly to the opening.

## Revendications

1. Dispositif de sorption sous vide comprenant,
- une première zone de volume (1) dans laquelle sont disposés un sorbeur (4) sorbant ou désorbant périodiquement un produit frigorigène et un condensateur (5)
- une deuxième zone de volume (2) disposée sous la première dans laquelle est disposée un évaporateur (6) entouré complètement de produit frigorigène pendant la phase de désorption, et
- une troisième zone de volume (3) qui est raccordée fluidiquement à la deuxième zone de volume (2) au moyen d'une conduit de raccordement (8) muni d'une pompe (7) pour recevoir le produit frigorigène et qui comporte au moins une ouverture sur la deuxième zone de volume (2)
**caractérisé en ce que**
la troisième zone de volume (3) comporte une taille de volume suffisante pour la libération au moins partiellement du produit frigorigène de l'évaporateur (6).

2. Dispositif de sorption sous vide selon la revendication 1,
**caractérisé en ce qu'**
un corps de déplacement (10) est disposée dans une zone de transition définissant une surface de section (Q_{Ü}) horizontale entre la première et la deuxième zone de volume (1, 2).

3. Dispositif de sorption sous vide selon la revendication 2,
**caractérisé en ce que**
la troisième zone de volume (3) est disposée au moins en partie dans le corps de déplacement (10).

4. Dispositif de sorption sous vide selon la revendication 2 ou 3,
**caractérisé en ce que**
le corps de déplacement (10) comporte une surface de section (Q_{V}) horizontale qui est plus petite que la surface de section (Q_{Ü}) de la zone de transition.

5. Dispositif de sorption sous vide selon l'une quelconque des revendications 2 à 4,
**caractérisé en ce que**
le corps de déplacement (10) est disposé dans un conteneur (11) formant au moins en partie la troisième zone de volume (3) comportant l'ouverture.

6. Dispositif de sorption sous vide selon la revendication 5,
**caractérisé en ce que**
le conteneur (11) comporte une surface de section (Q_{B}) horizontale dans la zone de montage du corps de déplacement (10) qui est constituée plus grande que le corps de déplacement (10), mais plus petite que celle de la zone de transition.

7. Dispositif de sorption sous vide selon la revendication 5 ou 6,
**caractérisé en ce que**
le conteneur (11) comporte au moins un trop-plein de produit frigorigène (12), le trop-plein de produit frigorigène (12) étant constitué de préférence dirigé dans une zone libre d'évaporateur de la deuxième zone de volume (2).

8. Dispositif de sorption sous vide selon l'une quelconque des revendications 2 à 7,
**caractérisé en ce que**
le corps de déplacement (10) comporte un contour extérieur en forme de tête de champignon, en forme de cône, de forme conique ou de forme analogue à celles-ci.

9. Dispositif de sorption sous vide selon l'une quelconque des revendications 1 à 8,
**caractérisé en ce que**
la troisième zone de volume (3) est disposée complètement à l'intérieur de la deuxième zone de volume (2).

10. Dispositif de sorption sous vide selon l'une quelconque des revendications 1 à 8,
**caractérisé en ce que**
la troisième zone de volume (3) est disposée au moins en partie en dehors de la deuxième zone de volume (2).

11. Dispositif de sorption sous vide selon l'une quelconque des revendications 1 à 10,
**caractérisé en ce que**
la troisième zone de volume (3) est disposée au moins en partie au-dessus de l'évaporateur (6).

12. Dispositif de sorption sous vide selon l'une quelconque des revendications 1 à 11,
**caractérisé en ce que**
la troisième zone de volume (3) comporte des ouvertures de sortie (13) pour le produit frigorigène tournées vers l'évaporateur (6).

13. Dispositif de sorption sous vide selon l'une quelconque des revendications 1 à 12,
**caractérisé en ce que**
l'évaporateur (6) est formé d'au moins un tube courbé dans son sens axial.

14. Dispositif de sorption sous vide selon l'une quelconque des revendications 1 à 13,
**caractérisé en ce que**
l'évaporateur (6) est constitué comme une spirale tubulaire, un espace libre étant prévu de préférence au centre de l'évaporateur (6) constitué comme une spirale tubulaire, qui est rempli au moins en partie par la troisième zone de volume (3).

15. Dispositif de sorption sous vide selon l'une quelconque des revendications 1 à 14,
**caractérisé en ce qu'**
un élément conducteur (14) guidant le produit frigorigène selon nécessité directement ou indirectement vers l'ouverture, est disposé entre la première et la deuxième zone de volume (1, 2).
